# EUROPÄISCHE PATENTSCHRIFT

(11) **EP 2 561 258 B1**
(45) Veröffentlichungstag und Bekanntmachung des Hinweises auf die Patenterteilung: **11.06.2014**
(21) Anmeldenummer: 11715426.0
(22) Anmeldetag: 12.04.2011
(51) Int. Cl.: F16K 25/02, F16K 1/226

(54) **ABSPERRARMATUR MIT EINER BLOCK- UND BLEEDEINRICHTUNG**
SHUT-OFF VALVE WITH A BLOCK- AND BLEED-DEVICE
SOUPAPE D'ARRÊT AVEC DISPOSITIF DE BLOCAGE ET PURGE

(30) Priorität: 23.04.2010 DE 102010018023
(43) Veröffentlichungstag der Anmeldung: 27.02.2013
(73) Patentinhaber: Metso Automation MAPAG GmbH, 86497 Horgau (DE)
(72) Erfinder: PAUER, Andreas, 86179 Augsburg (DE)
(74) Vertreter: Geirhos, Johann
(86) Internationale Anmeldenummer: PCT/EP2011/001828
(87) Internationale Veröffentlichungsnummer: WO 2011/131308

(56) Entgegenhaltungen:
- EP-B1- 1 207 325
- GB-A- 668 745
- JP-A- 2003 004 164

## Beschreibung

Die Erfindung betrifft eine Absperrarmatur mit einem Gehäuse, einem in dem Gehäuse angeordneten Ventilsitz und einer den Ventilsitz ansteuernden Absperrklappe, die im Gehäuse drehbar gelagert ist, insbesondere doppelt-exzentrisch gelagert ist, wobei im Gehäuse ein Dichtring angeordnet ist, insbesondere axial einstellbar angeordnet ist, und im Bereich des Ventilsitzes eine Dichteinrichtung angeordnet ist, die von zwei in Durchströmungsrichtung beabstandeten Dichtelementen gebildet ist, zwischen denen ein Ringraum ausgebildet ist, der als Block- und Bleedeinrichtung ausgestaltet und über eine Sperrmediumzuführung mit einem Sperrmedium beaufschlagbar ist.

Gattungsgemäße Absperrarmaturen mit zwei Dichtelementen und einem dazwischen liegenden Ringraum, der eine Block- und Bleedeinrichtung bildet und von Sperrmedium beaufschlagbar ist, sind aus der EP 1 207 325 B1 oder der DE 195 15 014 A1 bekannt.

Aus der EP 1 207 325 B1 ist eine Absperrklappe bekannt, bei der die beiden Dichtelemente von zwei ringförmigen Metalllippen gebildet werden, die auf der Absperrklappe montiert sind. Bei geschlossener Absperrklappe entsteht zwischen den beiden Dichtelementen ein Ringraum der mit einem Sperrmedium gefüllt werden kann, um zusätzlich zur Dichtfunktion der mechanischen Dichtelemente ein weiteres, redundantes Dichtsystem hinzuzufügen. Solange der Druck in dem Ringraum zwischen den mechanischen Dichtelementen größer ist als der abzusperrende Druck vor und hinter der Absperrklappe der Absperrarmatur ist, ist eine sichere Trennung zweier Medien voneinander möglich. Hierzu wird über einen umlaufenden Verteilungsringkanal ein Sperrmedium - zum Beispiel Wasserdampf oder Stickstoff - über den Dichtring und entsprechende Zuführungsbohrungen in dem Ringraum zwischen den beiden Dichtelementen gedrückt. Für eine Mengenbegrenzung ist am Sperrmediumeintritt im Bereich entsprechender Anschlüsse für eine Sperrmediumquelle der Absperrarmatur in der Regel eine Festblende vorgeschaltet, um den Sperrmedienverbrauch zu begrenzen.

Diese Ausführung hat den Nachteil, dass zwar mit dem Sperrmedium in dem Ringraum ein Trennmedium vorhanden ist, es kann jedoch nicht sicher gestellt werden, ob der Druck des Sperrmediums in dem Ringraum zwischen den beiden Dichtelementen ausreichend hoch ist, um in jedem Fall ein Druckniveau sicherzustellen, das höher als der jeweilige Druck vor oder hinter der Absperrklappe ist. Bei einer eventuell auftretenden Leckage durch Beschädigungen an den Dichtelementen kommt es zu einem Verlust von Sperrmedium in dem Ringraum der Block- und Bleedeinrichtung zwischen den beiden Dichtelementen. Es ist bereits bekannt, eine Druckmessung stromauf bzw. stromab der Festblende in der Sperrmediumzuführung im Bereich der Anschlüsse durchzuführen. Da jedoch die Zuströmkanäle der Sperrmediumzuführung in der Absperrarmatur eine Drosselwirkung besitzen, kann mit einer derartigen Druckmessung, die in der Sperrmediumzuführung angeordnet bzw. der Sperrmediumzuführung zugeordnet ist, nicht sichergestellt werden, dass der Druck des Sperrmediums in dem Ringraum der Block- und Bleedeinrichtung höher als die abzusperrenden Drücke vor bzw. hinter der Absperrklappe ist. Insbesondere bei Einsätzen der Absperrklappe in sicherheitsrelevanten Bereichen ist hierbei die Betriebssicherheit der Absperrarmatur nicht gegeben.

Der vorliegenden Erfindung liegt die Aufgabe zugrunde, eine Absperrarmatur der eingangs genannten Gattung zur Verfügung zu stellen, die mit geringem Bauaufwand eine erhöhte Betriebssicherheit aufweist.

Diese Aufgabe wird erfindungsgemäß dadurch gelöst, dass die Absperrarmatur mit einer Druckmesseinrichtung versehen ist, mittels der der in dem Ringraum der Block- und Bleedeinrichtung herrschende Druck erfassbar ist, wobei die Druckmesseinrichtung unabhängig von der Sperrmediumzuführung mit dem Ringraum verbunden ist. Der erfindungsgemäße Gedanke besteht somit darin, an der Absperrarmatur eine Druckmesseinrichtung vorzusehen, mit der direkt und unmittelbar der im Ringraum der Block- und Bleedeinrichtung anstehende Druck unabhängig von der Sperrmediumzuführung gemessen werden kann. Mit einer derartigen Druckmesseinrichtung ist es auf einfache Weise möglich, den vorherrschenden Druck in dem Ringraum der Block- und Bleedeinrichtung zwischen den Dichtelementen exakt zu erfassen und zu messen, so dass im Falle einer auftretenden Leckage Maßnahmen ergriffen werden können, um das Druckniveau in dem Ringraum der Block- und Bleedeinrichtung über dem Niveau der abzusperrenden Drücke vor und hinter der Absperrklappe zu halten. Dies wird erreicht, da die Druckmesseinrichtung unmittelbar und unabhängig von der Sperrmediumzuführung mit dem Ringraum verbunden ist. Dadurch wird durch die erfindungsgemäße Druckmesseinrichtung auf einfache Weise eine Erhöhung der Betriebssicherheit der Absperrarmatur erreicht, insbesondere von Absperrarmaturen, die in sicherheitsrelevanten Bereichen eingesetzt werden.

Gemäß einer Ausführungsform der Erfindung ist die Absperrklappe mittels einer Antriebswelle in dem Gehäuse drehbar gelagert, wobei die Druckmesseinrichtung an der Absperrklappe angeordnet ist und über eine Druckmessverbindungsleitung, die in der Antriebswelle angeordnet ist, zu einem außerhalb des Gehäuses angeordneten Druckmesssensor geführt ist. Über eine an der Absperrklappe angeordnete Druckmesseinrichtung, die mit dem Ringraum der Block- und Bleedeinrichtung in Verbindung steht und die über die Antriebswelle nach Außen zu einem Druckmesssensor geführt ist, kann mit geringem Bauaufwand der Druck in dem Ringraum der Block- und Bleedeinrichtung erfasst und gemessen werden.

Die Druckmesseinrichtung kann gemäß einer alternativen Ausführungsform der Erfindung einen innerhalb des Gehäuses angeordneten Druckmesssensor aufweisen, der mit dem Ringraum in Verbindung steht, wobei der Druckmesssensor mittels einer drahtlosen Energie- und Messwertübertragung mit einer außerhalb des Gehäuses angeordneten Auswerteeinheit in Verbindung steht. Mit einer derartigen Druckmesseinrichtung kann ebenfalls mit geringem Bauaufwand der Druck in dem Ringraum der Block- und Bleedeinrichtung erfasst und gemessen werden.

Gemäß einer vorteilhaften Ausführungsform der Erfindung weist die Druckmesseinrichtung einen außerhalb des Gehäuses angeordneten Druckmesssensor auf, der über ein durch das Gehäuse geführtes Druckrohr, das in dem Dichtring befestigt ist, insbesondere in dem Dichtring eingeschraubt ist, mit dem Ringraum in Verbindung steht. Mit einem derartigen Druckrohr als Druckmesssonde, das in dem Dichtring befestigt ist und durch das Gehäuse nach Außen geführt ist, kann der Druck in dem Ringraum der Block- und Bleedeinrichtung ebenfalls auf einfache Weise erfasst und gemessen werden, wobei eine derartige Druckmesseinrichtung weiterhin auf einfache Weise an bestehenden Absperrarmaturen nachgerüstet werden kann, da lediglich geringfügige bauliche Veränderungen erforderlich sind.

Die Sperrmediumzuführung für den Ringraum der Block- und Bleedeinrichtung weist bei der erfindungsgemäßen Absperrarmatur einen zwischen dem Gehäuse und dem Dichtring ausgebildeten Verteilungsringkanal auf. Sofern sich das Druckrohr durch die Verteilungsringkanal erstreckt und mittels einer Dichtungseinrichtung gegenüber der Verteilungsringkanal abgedichtet ist, kann eine sichere Trennung des Druckniveaus der Sperrmediumzuführung in dem Verteilungsringkanals und des Druckes in dem Ringraum erzielt werden, so dass exakte und sichere Messung des in dem Ringraum anstehenden Druckes durch das Druckrohr unabhängig von der Sperrmediumzuführung erzielt werden kann.

Gemäß einer bevorzugten Weiterbildung der Erfindung ist die Dichtungseinrichtung des Druckrohrs gegenüber dem Verteilungsringkanal der Sperrmediumzuführung als redundante Dichtungseinrichtung ausgebildet. Hierdurch kann das Druckrohr und somit die Messung des Druckes in dem Ringraum der Block- und Bleedeinrichtung sicher gegenüber dem Druckniveau der Sperrmediumzuführung in dem Verteilungsringkanal getrennt werden, um eine sichere Erfassung und exakte Messung des Druckes in dem Ringraum über das Druckrohr sicherzustellen.

Die redundante Dichtungseinrichtung weist bevorzugt eine zwischen dem Druckrohr und dem Dichtring angeordnete Weichstoffdichtung, insbesondere eine Graphitdichtung, auf.

Weiterhin weist die redundante Dichtungseinrichtung eine metallische Dichtung zwischen dem Druckrohr und dem Dichtring auf. Mit einem derartigen redundanten Dichtungssystem kann eine sichere Abdichtung des Druckrohres gegenüber dem Dichtring und somit dem Verteilungsringkanal erzielt werden, die bei Betriebstemperaturen über 450° C betriebssicher ist und eine Druckmessung bei derartigen Betriebstemperaturen der Absperrarmatur ermöglicht.

Die metallische Dichtung kann mit geringem Bauaufwand von einer Kegelfläche zwischen dem Druckrohr und dem Dichtring gebildet werden. An dem Außenumfang des Druckrohres sowie der Aufnahmebohrung für das Druckrohr in dem Dichtring können derartige Kegelflächen auf einfache Weise und mit geringem Bauaufwand hergestellt werden.

Die metallische Dichtung ist bevorzugt als Weichmetalldichtung ausgebildet, wobei das Druckrohr oder der Dichtring im Bereich der Kegelfläche mit einem Weichmetall, insbesondere Silber, beschichtet ist. Beim Einschrauben des Druckrohres in den Dichtring kann mit einer derartigen Weichmetalldichtung eine sichere Abdichtung erzielt werden.

Hinsichtlich eines einfachen Aufbaus mit einem geringen Bauaufwand ergeben sich besondere Vorteile, wenn sich das Druckrohr gemäß einer bevorzugten Ausgestaltungsform der Erfindung durch eine Durchgangsöffnung, insbesondere eine Durchgangsbohrung, des Gehäuses erstreckt und in der Durchgangsöffnung mit Spiel geführt ist. Durch das Spiel zwischen der Durchgangsbohrung des Gehäuses und dem Druckrohr wird erzielt, dass das Druckrohr relativ zum Gehäuse beweglich ist, insbesondere in axialer Richtung. Hierdurch ist nicht erforderlich, dass die Durchgangsbohrung im Gehäuse exakt mit der Aufnahmebohrung in dem Dichtring fluchtet, so dass die Gehäusebohrung mit geringem Fertigungsaufwand hergestellt werden kann. Zudem wird durch die Bewegbarkeit des Druckrohres in der Gehäusebohrung relativ zum Gehäuse gewährleistet, dass die Dichteinrichtung, die von dem Dichtring und den beiden Dichtelementen gebildet ist, eingestellt werden kann, beispielsweise durch ein axiales Verstellen des Dichtrings im Gehäuse.

Bevorzugt ist das Druckrohr am Gehäuse mittels einer Dichtungs- und Befestigungseinrichtung angebaut, wodurch weiterhin eine sichere Befestigung des Druckrohres am Gehäuse und eine Abdichtung des Druckrohres nach Außen zur Umgebung erzielt werden kann.

Die Dichtungs- und Befestigungseinrichtung weist gemäß einer vorteilhaften Ausgestaltungsform der Erfindung eine Dichtplatte auf, die mit einer Durchgangsbohrung für das Druckrohr versehen ist, wobei die Dichtplatte mittels einer Klemmeinrichtung, insbesondere einem Klemmflansch, an dem Gehäuse befestigbar ist. Die Dichtplatte dient hierbei über die Durchgangsbohrung zur Lagerung und Führung des Druckrohres und ist allseitig bewegbar an dem Gehäuse angeordnet. Mittels einer von einem Klemmflansch gebildeten Klemmeinrichtung kann die Dichtplatte auf einfache Weise am Gehäuse verklemmt und somit befestigt werden. Bevorzugt ist zwischen der Dichtplatte und dem Gehäuse eine Weichstoffdichtung, insbesondere einer Graphitdichtung, angeordnet, wodurch auf einfache Weise die Flanschfläche zwischen dem Gehäuse und der Dichtplatte gegenüber der Umgebung abgedichtet werden kann.

Gemäß einer vorteilhaften Ausführungsform der Erfindung ist zwischen dem Druckrohr und der Dichtplatte eine Dichtungseinrichtung, insbesondere eine Stopfbuchspackung, angeordnet, wodurch das Druckrohr auf einfache Weise gegenüber der Umgebung abgedichtet werden kann. Zudem ermöglicht eine Stopfbuchspackung eine einfache Montage des Druckrohres und einen verkantungsfreien Aufbau.

Die Stopfbuchspackung umfasst zweckmäßigerweise einen federbelasteten Druckring, wodurch mit der Stopfbuchspackung eine sichere Abdichtung des Druckrohres gegenüber der Umgebung erzielt werden kann.

Um bei einer in die Durchflussstellung befindlichen, geöffneten Absperrklappe ein Zusetzen und Verstopfen des Druckrohres bzw. einer Messöffnung in dem Dichtring zu vermeiden, ist gemäß einer vorteilhaften Weiterbildung der Erfindung vorgesehen, dass das Druckrohr zum Spülen des Druckrohres, insbesondere bei in der Durchflussstellung befindlichen Absperrklappe, an die Sperrmediumzuführung anschließbar ist. Hierdurch kann insbesondere bei einer Absperrarmatur, die zum Absperren von Fremdpartikel oder Verunreinigungen enthaltenden Medien verwendet wird, beispielsweise zur Absperrung von Spaltgas, das als Partikel bzw. Verunreinigungen Koks enthält, eine geringe Menge des Sperrmediums bei geöffneter Absperrklappe durch das Druckrohr und die Messöffnung in dem Dichtring gedrückt werden, so dass ein Zusetzen und Verstopfen des Druckrohres bzw. einer Messöffnung in dem Dichtring sicher und auf einfache Weise vermieden werden kann.

Gemäß einer vorteilhafte Weiterbildung der Erfindung dient der mittels der Druckmesseinrichtung erfasste Druck in dem Ringraum als Führungsgröße einer Regeleinrichtung der Sperrmediumzuführung, um den im Ringraum herrschenden Sperrmediumdruck oberhalb der abzusperrenden Drücke zu halten. Mit der erfindungsgemäßen Druckmesseinrichtung, mit der direkt der Druck des Sperrmediums in dem Ringraum der Block- und Bleedeinrichtung erfasst und gemessen werden kann, kann von der Regeleinrichtung durch eine Druckerhöhung und/oder eine Durchflusserhöhung der Sperrmediumzuführung auf einfache Weise der Druck in dem Ringraum derart gesteuert bzw. geregelt werden, dass der Druck im Ringraum größer als der abzusperrende Druck vor der Absperrklappe und/oder hinter der Absperrklappe ist, um eine sichere Trennung der abzusperrenden Medien zu erzielen.

Die Erfindung betrifft weiterhin ein Verfahren zum Betrieb einer Absperrarmatur mit einer erfindungsgemäßen Druckmesseinrichtung, wobei mittels der Druckmesseinrichtung der Druck des Sperrmediums in dem Ringraum gemessen wird und der gemessene Druck im Ringraum als Parameter einer Betriebssteuerung dient.

Vorteilhaft kann bei einem derartigen Verfahren der Druck als Führungsgröße oder Regelgröße eines Regelkreises der Sperrmediumzuführung verwendet werden, um den Druck des Sperrmediums in dem Ringraum höher als den Druck vor der Absperrklappe und/oder den Druck hinter der Absperrklappe zu halten. Mit einem derartigen Verfahren, bei dem der von der Druckmesseinrichtung erfasste Druck des Sperrmediums in dem Ringraum der Block- und Bleedeinrichtung als Führungsgröße bzw. Regelgröße verwendet wird, um durch eine Druckerhöhung und/oder eine Durchflusserhöhung der Sperrmediumzuführung sicherzustellen, dass der Druck des Sperrmediums in dem Ringraum sicher größer als der abzusperrende Druck vor und hinter der Absperrklappe ist, kann die Betriebssicherheit der Absperrarmatur auf einfache Weise erhöht werden und die Absperrarmatur in sicherheitsrelevanten Bereichen und Anlagen eingesetzt werden. Es kann somit sichergestellt werden, dass der Druck im Ringraum höher als der Druck vor und hinter der Absperrklappe ist, um eine sichere Absperrung zu erzielen.

In günstiger Ausführungsform des Verfahrens wird zur Dichtigkeitsüberprüfung einer Absperrarmatur mit einer erfindungsgemäßen Druckmesseinrichtung nach dem Schließen der Absperrklappe der Ringraum zwischen den Dichtelementen von der Sperrmediumzuführung getrennt und anschließend entlüftet. Sodann wird mittels der Druckmesseinrichtung der Druck in dem Ringraum gemessen, wobei bei einem sich von dem Entlüftungsdruck abweichenden Druck eine Undichtigkeit der Dichtelemente ermittelt wird. Mit der erfindungsgemäßen Druckmesseinrichtung wird die Möglichkeit gegeben, die Dichtigkeit der Dichtelemente zu überprüfen und nachzuweisen. Wird kein Sperrmedium in den Druckraum zwischen die Dichtelemente gegeben, sollte sich nach vorheriger Entlüftung des Druckraumes kein Druck aufbauen. Wenn sich ein Druck wie vor der Absperrklappe aufbaut, kann auf eine Undichtigkeit des Dichtelements vor der Absperrklappe geschlossen werden. Baut sich ein Druck wie nach der Absperrklappe auf, kann auf eine Undichtigkeit des Dichtelements nach der Absperrklappe geschlossen werden.

Ein besonderer Vorteil der Erfindung liegt darin, dass die bisherigen Funktionen der Absperrarmatur in keiner Weise durch die Druckmesseinrichtung berührt oder verändert werden. Die Druckmesseinrichtung ist daher prinzipiell auch jederzeit nachrüstbar, um bei gegebener Instrumentierung die Sicherheit einer mit der Absperrarmatur versehenen Anlage zu erhöhen.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Absperrarmatur im Längsschnitt,
- Figur 2: die Absperraramatur in einer perspektivischen Darstellung,
- Figur 3: den Bereich der Druckmesseinrichtung der Figur 2 in einer vergrößerten Darstellung,
- Figur 4: den Bereich der Druckmesseinrichtung in einem Längsschnitt und
- Figur 5: einen Ausschnitt der Figur 4 in einer vergrößerten Darstellung.

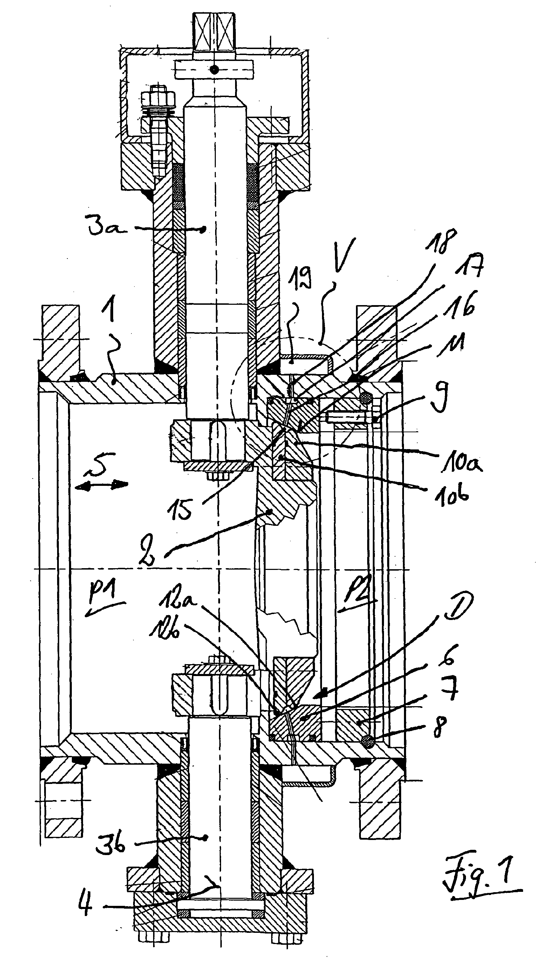

In der Figur 1 ist eine erfindungsgemäße Absperrarmatur in einem Längsschnitt gezeigt. Die Absperrarmatur weist ein Gehäuse 1 auf, in dem eine Absperrklappe 2 bevorzugt doppel-exzentrisch drehbar gelagert ist. In der Figur 1 ist die Absperrklappe 2 in der Sperrstellung gezeigt, in der ein Ventilsitz V angesteuert ist. Die Absperrklappe 2 ist mittels einer geteilten Antriebswelle 3a, 3b um eine Drehachse 4 drehbar gelagert. Die obere Antriebswelle 3a steht auf nicht mehr dargestellte Weise mit einer Antriebseinrichtung in Verbindung. Die untere Abtriebswelle 3b bildet einen Lagerzapfen. In geöffneter Stellung ist die Absperrarmatur in Durchflussrichtung 5 von Medium, beispielsweise Spaltgas, durchströmbar. Der Ventilsitz V ist zwischen einem gehäuseseitigen, als Ventilsitzbauteil ausgebildeten Dichtring 6 und der Absperrklappe 2 ausgebildet. Der Dichtring 6 ist über einen Befestigungsring 7, eine Halteeinrichtung 8 und mehrere Befestigungsschrauben 9 an dem Gehäuse 1 axial einstellbar angeordnet und mit dem Gehäuse 1 verspannbar.

Im Bereich des Ventilsitzes V ist eine Dichteinrichtung D angeordnet, die von zwei in Durchströmungsrichtung 5 axial beabstandeten Dichtelementen 10a, 10b gebildet ist. Der Dichtring 6 ist mit einer kegelförmigen, sich nach Innen verjüngenden Dichtfläche 11 versehen. Im vorliegenden Ausführungsbeispiel sind die beispielsweise als Metallringe oder Metalllippen ausgebildeten Dichtelemente 10a, 10b an der Absperrklappe 2 angeordnet. Es ist jedoch ebenfalls möglich, die Dichtelemente an dem Dichtring 6 anzuordnen und die Absperrklappe 2 mit einer entsprechenden kegelförmigen Dichtfläche zu versehen. Jedes Dichtelement 10a, 10b ist im Bereich der Dichtfläche 11 mit einer Dichtfläche 12a, 12b versehen, die einen kreisförmigen Querschnitt aufweisen.

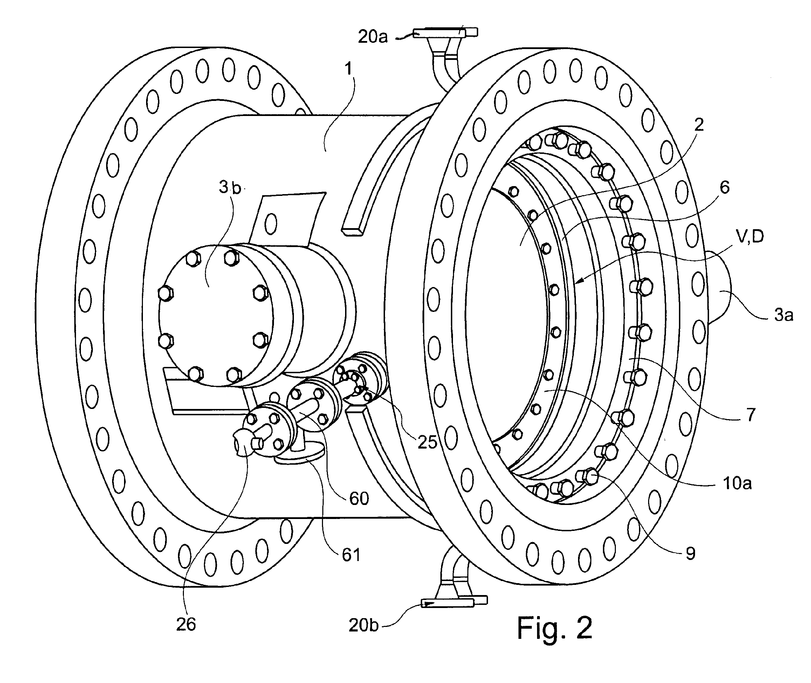

Zwischen den Dichtelementen 10a, 10b und dem Dichtring 6 ist bei geschlossener Absperrklappe ein Ringraum 15 ausgebildet, der eine Block- und Bleedeinrichtung bildet und über mindestens eine in dem Dichtring 15 ausgebildete Verbindungsbohrung 16 mit einem zwischen dem Gehäuse 1 und dem Dichtring 6 ausgebildeten, umlaufenden Verteilungsringkanal 17 in Verbindung steht. Die Verteilungsringkanal 17 steht über mindestens eine im Gehäuse 1 ausgebildete Verbindungsbohrung 18 mit einem Anschlussraum 19 in Verbindung, der mit in der Figur 2 näher dargestellten Anschlüssen 20a, 20b in Verbindung steht, die über eine nicht mehr dargestellte Versorgungsleitung mit einer Sperrmediumversorgung verbunden sind, um den Ringraum 15 mit einem Sperrmedium, beispielsweise Wasserdampf oder Stickstoff, zu beaufschlagen. Die Verbindungsbohrung 16, der Verteilungsringkanal 17, die Verbindungsbohrung 18, der Anschlussraum 19 und die Anschlüssen 20a, 20b sowie die Versorgungsleitung zu der der Sperrmediumversorgung bilden hierbei die Sperrmediumzuführung für den Ringraum 15.

Erfindungsgemäß weist die Absperrarmatur eine Druckmesseinrichtung 25 auf, mittels der direkt der Druck Pi in dem Ringraum 15 der Block- und Bleedeinrichtung unabhängig von der Sperrmediumzuführung erfassbar und messbar ist. Die Druckmesseinrichtung 25 ist an dem Gehäuse 1 im Bereich des Lagerzapfens der unteren Antriebswelle 3b angeordnet.

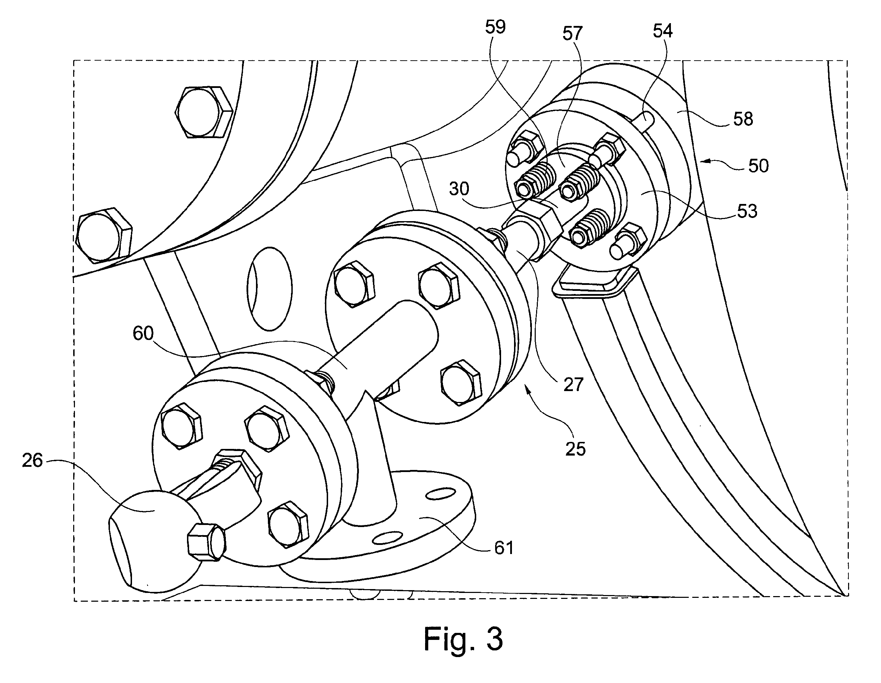

Wie in Verbindung mit der Figur 3 dargestellt ist, umfasst die Druckmesseinrichtung 25 einen außerhalb des Gehäuses 1 angeordneten Druckmesssensor 26, der über ein T-Stück 60 und einen Anschlussstutzen 27 mit einem durch das Gehäuse 1 geführten Druckrohr 30 verbunden ist, die eine Druckmesssonde bildet.

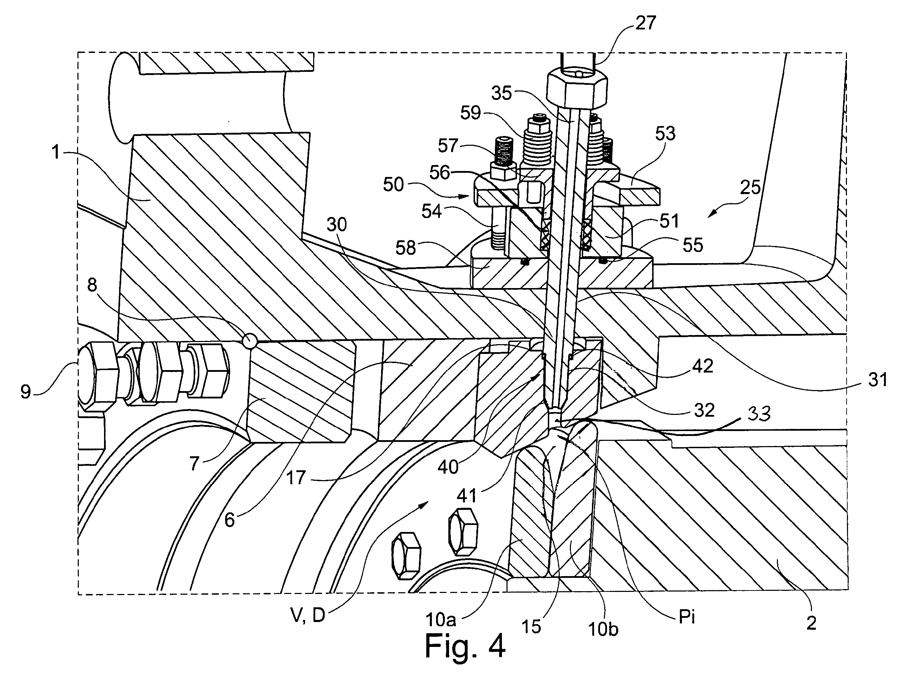

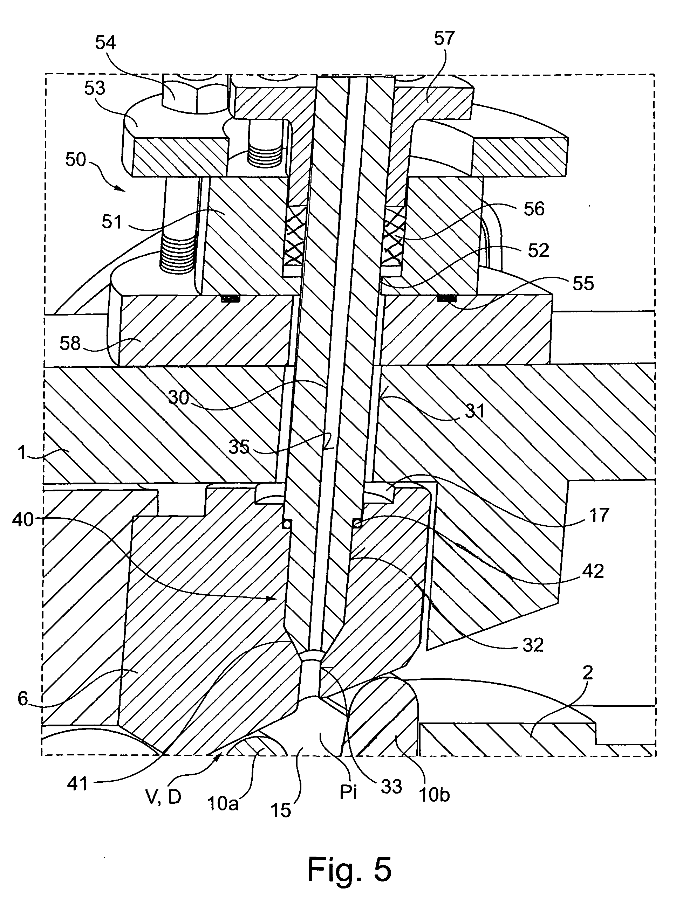

Das Druckrohr 30 ist - wie aus den Figuren 4 und 5 zu entnehmen ist - radial zu dem Gehäuse 1 angeordnet und erstreckt sich in radialer Richtung durch eine Gehäusebohrung 31 in der Gehäusewand des Gehäuses 1, deren Durchmesser größer als der Außendurchmesser des Druckrohres 30 ist, und durch den Verteilungsringkanal 17 in eine Aufnahmebohrung 32 des Dichtring 6. Das Druckrohr 30 ist im vorderen Bereich mit einem Gewinde versehen und in eine entsprechende Gewindeaufnahme der Aufnahmebohrung 32 eingeschraubt. Somit ist das Druckrohr 30 in dem Dichtring 6 befestigt.

Das Druckrohr 30 ist mit einem bevorzugt konzentrischen Messkanal 35 versehen, der an der Spitze des Druckrohres 30 mittels einer Messöffnung 33 der Aufnahmebohrung 32 des Dichtrings 6 mit dem Ringraum 15 der Block- und Bleedeinrichtung in Verbindung steht. Über die Messöffnung 33 des Dichtrings 6 und den Messkanal 35 des Druckrohres 30 kann somit der Druck Pi in dem Ringraum 15 nach Außen geführt werden und von dem Druckmesssensor 26 direkt der Druck Pi in dem Ringraum 15 erfasst werden.

Um das durch den Verteilungsringkanal 17 geführte Druckrohr 30 gegenüber dem Verteilungsringkanal 17 der Sperrmediumzuführung abzudichten, wird besonderes Augenmerk darauf verwendet, das Druckniveau der Sperrmediumzuführung über den umlaufenden Verteilungsringkanal 17 von dem Druckniveau in dem Ringraum 15 zwischen den beiden Dichtelementen 10a, 10b mittels einer Dichtungseinrichtung zu trennen.

Dies wird durch eine redundante Dichtungseinrichtung 40 erreicht, die von einer metallischen Dichtung 41 zwischen dem Druckrohr 30 und dem Dichtring 6 und einer zwischen dem Druckrohr 30 und dem Dichtring 6 angeordneten Weichstoffdichtung 42, beispielsweise einer als Dichtring ausgebildeten Graphitdichtung, gebildet ist. Die als Dichtring ausgebildete Weichstoffdichtung 42 ist zwischen einem Wellenabsatz des Druckrohres 30 und einem Bohrungsabsatz der Aufnahmebohrung 32 angeordnet. Die metallische Dichtung 41 ist als Dichtkonus ausgebildet, der zwischen einer Kegelfläche eines kegelförmigen Abschnitts der Aufnahmebohrung 32 und einer entsprechenden Kegelfläche an einem kegelförmigen Abschnitt im Bereich der Spitze des Druckrohres 30 gebildet ist. Die metallische Dichtung 41 ist bevorzugt als Weichmetalldichtung ausgebildet, wobei die Kegelfläche der Druckrohres 30 oder die Kegelfläche der Aufnahmebohrung 32 mit einem Weichmetall, beispielsweise Silber, beschichtet ist. Dieser Dichtungsaufbau mit der redundanten Dichtungseinrichtung 40 gewährleistet auch den Einsatz der Druckmessung bei hohen Temperaturen über 450°C.

Um die Montierbarkeit der Druckmesseinrichtung 25 und des Druckrohres 30 zu gewährleistet, ist das Druckrohr 30 in dem Dichtring 6 fest eingeschraubt und durch das Spiel zwischen der Gehäusebohrung 31 des Gehäuses 1 und dem Druckrohr 30 relativ zum Gehäuse 1 verschiebbar angeordnet. Hierdurch kann ein Einstellen der von dem Dichtelementen 10a, 10b und dem Dichtring 6 gebildeten Dichteinrichtung gewährleistet werden. Damit wird erreicht, dass die Gehäusebohrung 31 im Gehäuse 1 und die Aufnahmebohrung 32 im Dichtring 6 nicht genau zueinander fluchten müssen, wodurch der Fertigungsaufwand gering gehalten werden kann.

Zur Befestigung des Druckrohres 30 an dem Gehäuse 1 ist eine Dichtungs- und Befestigungseinrichtung 50 vorgesehen. Die Dichtungs- und Befestigungseinrichtung 50 umfasst eine allseitig bewegbare Dichtplatte 51, die mit einer Durchgangsbohrung 52 zur Lagerung und Halterung des Druckrohres 30 versehen ist. Die Dichtplatte 51 ist mittels einer Klemmeinrichtung 53 an dem Gehäuse 1 befestigbar. Die Klemmeinrichtung 53 ist von einem ringförmigen Klemmflansch gebildet, der mittels mehrerer Befestigungsschrauben 54 an dem Gehäuse 1 bzw. einem an dem Gehäuse 1 befestigten, beispielsweise verschweißten, Montageflansch 58 befestigt ist. Zwischen der Klemmeinrichtung 53 und der Gehäusewand 1 bzw. dem Montageflansch 58 ist die Dichtplatte 51 angeordnet, so dass über die Befestigungsschrauben 54 und die Klemmeinrichtung 53 die bewegliche Dichtplatte 51 an dem Gehäuse 1 befestigt werden kann.

Die Abdichtung des Druckrohres 30 im Bereich der Dichtplatte 31 nach außen zur Umgebung erfolgt über eine Weichstoffdichtung 55, insbesondere eine als Graphithochdruckdichtung ausgebildete Graphitdichtung, die zwischen der Dichtplatte 31 und dem Gehäuse 1 bzw. dem Montageflansch 58 angeordnet ist und einer innenliegenden Stopfbuchspackung 56, die zwischen dem Druckrohr 30 und der Dichtplatte 51 angeordnet ist. Die Stopfbuchspackung 56 ist mittels eines federbelastetes Druckringes 57 vorspannbar, der an dem Dichtring 51 über mehrere Federn 59 abgestützt ist. Das Druckrohr 30 kann hierbei mit einfachem Bauaufwand ohne Verkanten in das Gehäuse 1 eingebaut werden.

Bei geschlossener Absperrklappe 2 kann mittels des Druckrohres 30 direkt der Druck Pi in dem Ringraum 15 zwischen den beiden Dichtelementen 10a, 10b von dem Druckmesssensor 25 erfasst werden und als Parameter zur Betriebssteuerung verwendet werden. Sofern der gemessene Druck Pi in einer Regeleinrichtung für die Sperrmediumzuführung als Führungsgröße bzw. Regelgröße verwendet wird, kann sichergestellt werden, dass der Druck Pi des Sperrmediums in dem Ringraum 15 der Block- und Bleedeinrichtung im Betrieb der Absperrarmatur höher als der abzusperrende Druck P1 vor der Absperrklappe 2 bzw. der abzusperrende Druck P2 hinter der Absperrklappe 2 ist, so dass eine hohe Betriebssicherheit der Absperrarmatur erzielt wird, da durch das in dem Ringraum 15 anstehende Sperrmedium eine Trennung der beiden abzusperrenden Drücke P1 und P2 sicher erzielt werden kann.

Mit der erfindungsgemäßen Druckmesseinrichtung 25, bei der der Druck Pi direkt in dem Ringraum 15 erfasst wird, kann ebenfalls die Dichtigkeit der beiden Dichtelemente 10a, 10b überprüft und nachgewiesen werden. Hierzu wird der Ringraum 15 bei geschlossener Absperrklappe 2 von dem Sperrmedium getrennt und entlüftet, beispielsweise indem die Versorgungsleitung von den Anschlüssen 20a, 20b entkoppelt wird. In einer anschließenden Druckmessung mittels der Druckmesseinrichtung 25 wird der Druck Pi in dem Ringraum 15 gemessen. Sofern sich der gemessene Druck Pi von dem Entlüftungsdruck verändert, kann eine qualitative Aussage der Dichtwirkung bezüglich der Dichtelemente 10a, 10b gewonnen werden. Baut sich bei in der Sperrstellung befindlicher Absperrklappe 2 in dem Ringraum 15 ein Druck Pi auf, der mittels der Druckmesseinrichtung 25 auf exakte Weise erfasst werden kann, der sich dem Druck P1 von der Absperrklappe 2 annähert bzw. entspricht, ist von einer Undichtigkeit des Dichtelementes 10b auszugehen. Entsprechend ist von einer Undichtigkeit des Dichtelements 10a auszugehen, wenn sich in dem entlüfteten Ringraum 15 ein von der Druckmesseinrichtung 25 erfassbarer Druck Pi aufbaut, der sich dem Druck P2 hinter der Absperrklappe 2 annähert bzw. entspricht.

Um bei einer in die geöffneten Stellung befindlichen Absperrklappe 2 ein Verschmutzen und Zusetzen des Druckmesskanals 35 im Druckrohr 30 und/oder der Messöffnung 33 des Dichtrings 6 mit Verunreinigungen des durch die Absperrarmatur strömenden Mediums zu vermeiden, ist gemäß einer Weiterbildung der Erfindung vorgesehen, dass durch den Messkanal 35 des Druckrohres 30 und die Messöffnung 33 des Dichtrings 6 bei geöffneter Absperrklappe 2 konstant eine geringe Menge Sperrmedium gedrückt wird, um das Druckrohr 30 zu spülen. Das Sperrmedium kann hierbei zweckmäßiger Weise von der Sperrmediumzuführung für den Ringraum 15 abgezweigt werden. Hierzu ist ein Abzweig 61 an dem T-Stück 60 an die Sperrmediumzuführung anschließbar. Bei geschlossener Absperrklappe 2 ist diese Sperrmedienzuführung über das Druckrohr 30 mit einer nicht näher dargestellten Absperrarmatur abzustellen, um eine Fehlmessung zu vermeiden.

Die erfindungsgemäße Druckmesseinrichtung 25 kann hierbei auf einfache Weise an bestehenden Absperrarmaturen nachgerüstet werden.

Um die Betriebssicherheit weiter zu erhöhen, können an der Absperrarmatur mehrere erfindungsgemäße Druckmesseinrichtungen angebaut werden, beispielsweise ein redundanter Aufbau an zwei Stellen der Absperrarmatur.

Es ist selbstverständlich ebenfalls möglich, an dem Druckrohr 30 direkt einen Drucksensoranschluss zur Anordnung des Druckmesssensors 25 und/oder einen dem Abzweig 61 entsprechenden Sperrmediumanschluss für die Sperrmediumzuführung auszubilden.

## Patentansprüche

1. Absperrarmatur mit einem Gehäuse (1), einem in dem Gehäuse angeordneten Ventilsitz (V) und einer den Ventilsitz ansteuernden Absperrklappe (2), die im Gehäuse drehbar gelagert ist, insbesondere doppelt-exzentrisch gelagert ist, wobei im Gehäuse ein Dichtring (6) angeordnet ist, insbesondere axial einstellbar angeordnet ist, und im Bereich des Ventilsitzes (V) eine Dichteinrichtung (D) angeordnet ist, die von zwei in Durchströmungsrichtung (5) beabstandeten Dichtelementen (10a, 10b) gebildet ist, zwischen denen ein Ringraum (15) ausgebildet ist, der als Block- und Bleedeinrichtung ausgestaltet und über eine Sperrmediumzuführung mit einem Sperrmedium beaufschlagbar ist, **dadurch gekennzeichnet, dass** die Absperrarmatur mit einer Druckmesseinrichtung (25) versehen ist, mittels der der in dem Ringraum (15) der Block- und Bleedeinrichtung herrschende Druck (Pᵢ) erfassbar ist, wobei die Druckmesseinrichtung (25) unabhängig von der Sperrmediumzuführung mit dem Ringraum (15) verbunden ist.

2. Absperrarmatur nach Anspruch 1, **dadurch gekennzeichnet, dass** die Absperrklappe (2) mittels einer Antriebswelle (3a; 3b) in dem Gehäuse (1) drehbar gelagert ist, wobei die Druckmesseinrichtung (25) an der Absperrklappe (2) angeordnet ist und über eine Druckmessverbindungsleitung, die in der Antriebswelle (3a; 3b) angeordnet ist, zu einem außerhalb des Gehäuses (1) angeordneten Druckmesssensor geführt ist.

3. Absperrarmatur nach Anspruch 1, **dadurch gekennzeichnet, dass** die Druckmesseinrichtung (25) einen innerhalb des Gehäuses (1) angeordneten Druckmesssensor aufweist, der mit dem Ringraum (15) in Verbindung steht, wobei der Druckmesssensor mittels einer drahtlosen Energie- und Messwertübertragung mit einer außerhalb des Gehäuses (1) angeordneten Auswerteeinheit in Verbindung steht.

4. Absperrarmatur nach Anspruch 1, **dadurch gekennzeichnet, dass** die Druckmesseinrichtung (25) einen außerhalb des Gehäuses (1) angeordneten Druckmesssensor (26) aufweist, der über ein durch das Gehäuse (1) geführtes Druckrohr (30), das in dem Dichtring (6) befestigt ist, insbesondere in dem Dichtring (6) eingeschraubt ist, mit dem Ringraum (15) in Verbindung steht.

5. Absperrarmatur nach Anspruch 4, **dadurch gekennzeichnet, dass** die Sperrmediumzuführung einen zwischen dem Gehäuse (1) und dem Dichtring (6) ausgebildeten Verteilungsringkanal (17) aufweist, wobei sich das Druckrohr (30) durch den Verteilungsringkanal (17) erstreckt und mittels einer Dichtungseinrichtung (40) gegenüber dem Verteilungsringkanal (17) abgedichtet ist.

6. Absperrarmatur nach Anspruch 5, **dadurch gekennzeichnet, dass** die Dichtungseinrichtung (40) als redundante Dichtungseinrichtung ausgebildet ist.

7. Absperrarmatur nach Anspruch 5 oder 6, **dadurch gekennzeichnet, dass** die Dichtungseinrichtung (40) eine zwischen dem Druckrohr (30) und dem Dichtring (6) angeordneten Weichstoffdichtung (42), insbesondere einer Graphitdichtung, aufweist.

8. Absperrarmatur nach einem der Ansprüche 5 bis 7, **dadurch gekennzeichnet, dass** die Dichtungseinrichtung (40) eine metallische Dichtung (41) zwischen dem Druckrohr (30) und dem Dichtring (6) aufweist.

9. Absperrarmatur nach Anspruch 8, **dadurch gekennzeichnet, dass** die metallische Dichtung (41) von einer Kegelfläche zwischen dem Druckrohr (30) und dem Dichtring (6) gebildet ist.

10. Absperrarmatur nach Anspruch 8 oder 9, **dadurch gekennzeichnet, dass** die metallische Dichtung als Weichmetalldichtung ausgebildet ist, wobei das Druckrohr oder der Dichtring im Bereich der Kegelfläche mit einem Weichmetall, insbesondere Silber, beschichtet ist.

11. Absperrarmatur nach einem der Ansprüche 4 bis 10, **dadurch gekennzeichnet, dass** sich das Druckrohr (30) durch eine Durchgangsöffnung (31), insbesondere eine Durchgangsbohrung, des Gehäuses (1) erstreckt und in der Durchgangsöffnung (31) mit Spiel geführt ist.

12. Absperrarmatur nach einem der Ansprüche 4 bis 11, **dadurch gekennzeichnet, dass** das Druckrohr (30) am Gehäuse (1) mittels einer Dichtungs- und Befestigungseinrichtung (50) angebaut ist.

13. Absperrarmatur nach Anspruch 12, **dadurch gekennzeichnet, dass** die Dichtungs- und Befestigungseinrichtung (50) eine Dichtplatte (51) aufweist, die mit einer Durchgangsbohrung (52) für das Druckrohr (30) versehen ist, wobei die Dichtplatte (51) mittels einer Klemmeinrichtung (53), insbesondere einem Klemmflansch, an dem Gehäuse (1) befestigbar ist.

14. Absperrarmatur nach Anspruch 13, **dadurch gekennzeichnet, dass** zwischen der Dichtplatte (51) und dem Gehäuse (1) eine Weichstoffdichtung (55), insbesondere einer Graphitdichtung, angeordnet ist.

15. Absperrarmatur nach Anspruch 13 oder 14, **dadurch gekennzeichnet, dass** zwischen dem Druckrohr (30) und der Dichtplatte (51) eine Dichtungseinrichtung (56), insbesondere eine Stopfbuchspackung, angeordnet ist.

16. Absperrarmatur nach Anspruch 15, **dadurch gekennzeichnet, dass** die Stopfbuchspackung (56) einen federbelasteten Druckring (57) umfasst.

17. Absperrarmatur nach einem der Ansprüche 4 bis 16, **dadurch gekennzeichnet, dass** das Druckrohr (30) zum Spülen des Druckrohres (30), insbesondere bei in der Durchflussstellung befindlichen Absperrklappe (2), an die Sperrmediumzuführung anschließbar ist.

18. Absperrarmatur nach einem der Ansprüche 1 bis 17, **dadurch gekennzeichnet, dass** der mittels der Druckmesseinrichtung (25) erfasste Druck (Pi) in dem Ringraum (15) als Führungsgröße einer Regeleinrichtung der Sperrmediumzuführung dient, um den im Ringraum (15) herrschenden Sperrmediumdruck (Pi) oberhalb der abzusperrenden Drücke (P1; P2) zu halten.

19. Verfahren zum Betrieb einer Absperrarmatur nach einem der vorangegangenen Ansprüche, **dadurch gekennzeichnet, dass** mittels der Druckmesseinrichtung (25) der Druck (Pi) des Sperrmediums in dem Ringraum (15) gemessen wird und der gemessene Druck (Pi) als Parameter einer Betriebssteuerung dient.

20. Verfahren nach Anspruch 19, **dadurch gekennzeichnet, dass** der gemessene Druck (Pi) in dem Ringraum (15) als Führungsgröße oder Regelgröße eines Regelkreises der Sperrmediumzuführung verwendet wird, um den Druck (Pi) des Sperrmediums in dem Ringraum (15) höher als den Druck (P1) vor der Absperrklappe (2) und/oder den Druck (P2) hinter der Absperrklappe (2) zu halten.

21. Verfahren nach Anspruch 19 oder 20, **dadurch gekennzeichnet, dass** zur Dichtigkeitsüberprüfung der Absperrarmatur die Absperrklappe (2) geschlossen wird, der Ringraum (15) zwischen den Dichtelementen (10a; 10b) von der Sperrmediumzuführung getrennt und anschließend entlüftet wird, und anschließend mittels der Druckmesseinrichtung (25) der Druck (Pi) in dem Ringraum (15) gemessen wird, wobei bei einem sich von dem Entlüftungsdruck abweichenden Druck eine Undichtigkeit der Dichtelemente (10a; 10b) ermittelt wird.

## Claims

1. Shut-off valve with a housing (1), a valve seat (V) which is arranged in the housing, and a shut-off damper (2) which actuates the valve seat and is rotatably mounted in the housing, in particular is mounted in a double-concentric fashion, wherein a sealing ring (6) is arranged in the housing, in particular is arranged in an axially adjustable fashion, and a sealing device (D), which is formed by two sealing elements (10a, 10b) which are spaced apart in the through-flow direction (5) and between which an annular space (15), which is configured as a block and bleed device and is supplied with a blocking medium via a blocking medium feed line, is arranged in the region of the valve seat (V), **characterized in that** the shut-off valve is provided with a pressure-measuring device (25) by means of which the pressure (Pᵢ) prevailing in the annular space (15) of the block and bleed device can be measured, wherein the pressure-measuring device (25) is connected to the annular space (15) independently of the blocking medium feed line.

2. Shut-off valve according to Claim 1, **characterized in that** the shut-off damper (2) is rotatably mounted in the housing (1) by means of a drive shaft (3a; 3b), wherein the pressure-measuring device (25) is arranged on the shut-off damper (2) and is connected, via a pressure-measuring connecting line which is arranged in the drive shaft (3a; 3b), to a pressure-measuring sensor arranged outside the housing (1).

3. Shut-off valve according to Claim 1, **characterized in that** the pressure-measuring device (25) has a pressure-measuring sensor which is arranged inside the housing (1) and is connected to the annular space (15), wherein the pressure-measuring sensor is connected by means of a wireless means for transmitting energy and measured values to an evaluation unit which is arranged outside the housing (1).

4. Shut-off valve according to Claim 1, **characterized in that** the pressure-measuring device (25) has a pressure-measuring sensor (26) which is arranged outside the housing (1) and which is connected to the annular space (15) via a pressure tube (30) which is lead through the housing (1) and is attached in the sealing ring (6), in particular is screwed into the sealing ring (6).

5. Shut-off valve according to Claim 4, **characterized in that** the blocking medium feed line has a distribution ring duct (17) formed between the housing (1) and the sealing ring (6), wherein the pressure tube (30) extends through the distribution ring duct (17) and is sealed off from the distribution ring duct (17) by means of a sealing device (40).

6. Shut-off valve according to Claim 5, **characterized in that** the sealing device (40) is embodied as a redundant sealing device.

7. Shut-off valve according to Claim 5 or 6, **characterized in that** the sealing device (40) has a soft material seal (42), in particular a graphite seal, arranged between the pressure tube (30) and the sealing ring (6).

8. Shut-off valve according to one of Claims 5 to 7, **characterized in that** the sealing device (40) has a metallic seal (41) between the pressure tube (30) and the sealing ring (6).

9. Shut-off valve according to Claim 8, **characterized in that** the metallic seal (41) is formed by a conical surface between the pressure tube (30) and the sealing ring (6).

10. Shut-off valve according to Claim 8 or 9, **characterized in that** the metallic seal is embodied as a soft metal seal, wherein the pressure tube or the sealing ring is coated with a soft metal, in particular silver, in the region of the conical surface.

11. Shut-off valve according to one of Claims 4 to 10, **characterized in that** the pressure tube (30) extends through a through-opening (31), in particular a through-drilled hole, in the housing (1) and is led with play in the through-opening (31).

12. Shut-off valve according to one of Claims 4 to 11, **characterized in that** the pressure tube (30) is integrally attached to the housing (1) by means of a sealing and attachment device (50).

13. Shut-off valve according to Claim 12, **characterized in that** the sealing and attachment device (50) has a sealing plate (51) which is provided with a through-drilled hole (52) for the pressure tube (30), wherein the sealing plate (51) can be attached to the housing (1) by means of a clamping device (53), in particular a clamping flange.

14. Shut-off valve according to Claim 13, **characterized in that** a soft material seal (55), in particular a graphite seal, is arranged between the sealing plate (51) and the housing (1).

15. Shut-off valve according to Claim 13 or 14, **characterized in that** a sealing device (56), in particular a packing gland, is arranged between the pressure tube (30) and the sealing plate (51).

16. Shut-off valve according to Claim 15, **characterized in that** the packing gland (56) comprises a spring-loaded pressure ring (57).

17. Shut-off valve according to one of Claims 4 to 16, **characterized in that** the pressure tube (30) can be connected to the blocking medium feed line in order to rinse the pressure tube (30), in particular when a shut-off damper (2) is in the through-flow position.

18. Shut-off valve according to one of Claims 1 to 17, **characterized in that** the pressure (Pᵢ) which is detected, by means of the pressure-measuring device (25), in the annular space (15) serves as a reference variable of a control device of the blocking medium feed line in order to keep the blocking medium pressure (Pi) in the annular space (15) above the pressures (P1; P2) which are to be shut off.

19. Method for operating a shut-off valve according to one of the preceding claims, **characterized in that** the pressure (Pi) of the blocking medium in the annular space (15) is measured by means of the pressure-measuring device (25), and the measured pressure (Pi) serves as a parameter of an operational controller.

20. Method according to Claim 19, **characterized in that** the measured pressure (Pi) in the annular space (15) is used as a reference variable or control variable of a control circuit of the blocking medium feed line in order to keep the pressure (Pi) of the blocking medium in the annular space (15) higher than the pressure (P1) upstream of the shut-off damper (2) and/or the pressure (P2) downstream of the shut-off damper (2).

21. Method according to Claim 19 or 20, **characterized in that** in order to check the tightness of the shut-off valve the shut-off damper (2) is closed, the annular space (15) between the sealing elements (10a; 10b) is disconnected from the pressure medium feed line and subsequently vented, and subsequently the pressure (Pi) in the annular space (15) is measured by means of the pressure-measuring device (25), wherein in the case of a pressure which deviates from the venting pressure a lack of tightness of the sealing elements (10a; 10b) is determined.

## Revendications

1. Robinet d'arrêt comprenant un boîtier (1), un siège de soupape (V) disposé dans le boîtier et un clapet d'arrêt (2) commandant le siège de soupape, lequel est monté à rotation dans le boîtier, en particulier est monté de manière doublement excentrique, une bague d'étanchéité (6) étant disposée dans le boîtier, en particulier étant disposée de manière ajustable axialement, et un dispositif d'étanchéité (D) étant disposé dans la région du siège de soupape (V), lequel est formé par deux éléments d'étanchéité (10a, 10b) espacés dans la direction d'écoulement (5), entre lesquels un espace annulaire (15) est réalisé, lequel est configuré sous forme de dispositif de blocage et de purge et peut être sollicité avec un fluide-barrière par le biais d'une alimentation en fluide-barrière, **caractérisé en ce que** le robinet d'arrêt est pourvu d'un dispositif de mesure de pression (25), au moyen duquel la pression (Pi) régnant dans l'espace annulaire (15) du dispositif de blocage et de purge peut être détectée, le dispositif de mesure de pression (25) étant connecté à l'espace annulaire (15) indépendamment de l'alimentation en fluide-barrière.

2. Robinet d'arrêt selon la revendication 1, **caractérisé en ce que** le clapet d'arrêt (2) est monté de manière rotative dans le boîtier (1) au moyen d'un arbre d'entraînement (3a ; 3b), le dispositif de mesure de pression (25) étant disposé au niveau du clapet d'arrêt (2) et étant guidé jusqu'à un capteur de mesure de pression disposé à l'extérieur du boîtier (1) par le biais d'une conduite de connexion de mesure de pression qui est disposée dans l'arbre d'entraînement (3a ; 3b).

3. Robinet d'arrêt selon la revendication 1, **caractérisé en ce que** le dispositif de mesure de pression (25) présente un capteur de mesure de pression disposé à l'intérieur du boîtier (1), lequel est en liaison avec l'espace annulaire (15), le capteur de mesure de pression étant en liaison au moyen d'un transfert sans fil de valeur de mesure et d'énergie avec une unité d'analyse disposée à l'extérieur du boîtier (1).

4. Robinet d'arrêt selon la revendication 1, **caractérisé en ce que** le dispositif de mesure de pression (25) présente un capteur de mesure de pression (26) disposé à l'extérieur du boîtier (1), lequel est en liaison avec l'espace annulaire (15) par le biais d'un tube de pression (30) guidé à travers le boîtier (1), qui est fixé dans la bague d'étanchéité (6), notamment qui est vissé dans la bague d'étanchéité (6).

5. Robinet d'arrêt selon la revendication 4, **caractérisé en ce que** l'alimentation en fluide-barrière présente un canal annulaire de distribution (17) réalisé entre le boîtier (1) et la bague d'étanchéité (6), le tube de pression (30) s'étendant à travers le canal annulaire de distribution (17) et étant étanchéifié au moyen d'un dispositif d'étanchéité (40) vis-à-vis du canal annulaire de distribution (17).

6. Robinet d'arrêt selon la revendication 5, **caractérisé en ce que** le dispositif d'étanchéité (40) est réalisé sous forme de dispositif d'étanchéité redondant.

7. Robinet d'arrêt selon la revendication 5 ou 6, **caractérisé en ce que** le dispositif d'étanchéité (40) présente une garniture d'étanchéité en matériau tendre (42) disposée entre le tube de pression (30) et la bague d'étanchéité (6), en particulier une garniture d'étanchéité en graphite.

8. Robinet d'arrêt selon l'une quelconque des revendications 5 à 7, **caractérisé en ce que** le dispositif d'étanchéité (40) présente une garniture d'étanchéité métallique (41) entre le tube de pression (30) et la bague d'étanchéité (6).

9. Robinet d'arrêt selon la revendication 8, **caractérisé en ce que** la garniture d'étanchéité métallique (41) est formée par une surface conique entre le tube de pression (30) et la bague d'étanchéité (6).

10. Robinet d'arrêt selon la revendication 8 ou 9, **caractérisé en ce que** la garniture d'étanchéité métallique est réalisée sous forme de garniture d'étanchéité métallique tendre, le tube de pression ou la bague d'étanchéité étant revêtu(e) dans la région de la surface conique avec un métal tendre, en particulier de l'argent.

11. Robinet d'arrêt selon l'une quelconque des revendications 4 à 10, **caractérisé en ce que** le tube de pression (30) s'étend à travers une ouverture de passage (31), en particulier un alésage de passage, du boîtier (1) et est guidé avec jeu dans l'ouverture de passage (31).

12. Robinet d'arrêt selon l'une quelconque des revendications 4 à 11, **caractérisé en ce que** le tube de pression (30) est installé au niveau du boîtier (1) au moyen d'un dispositif d'étanchéité et de fixation (50).

13. Robinet d'arrêt selon la revendication 12, **caractérisé en ce que** le dispositif d'étanchéité et de fixation (50) présente une plaque d'étanchéité (51) qui est pourvue d'un alésage traversant (52) pour le tube de pression (30), la plaque d'étanchéité (51) pouvant être fixée au boîtier (1) au moyen d'un dispositif de serrage (53), en particulier d'une bride de serrage.

14. Robinet d'arrêt selon la revendication 13, **caractérisé en ce qu'**entre la plaque d'étanchéité (51) et le boîtier (1) est disposée une garniture d'étanchéité en matériau tendre (55), en particulier une garniture d'étanchéité en graphite.

15. Robinet d'arrêt selon la revendication 13 ou 14, **caractérisé en ce qu'**entre le tube de pression (30) et la plaque d'étanchéité (51) est disposé un dispositif d'étanchéité (56), en particulier une garniture de presse-étoupe.

16. Robinet d'arrêt selon la revendication 15, **caractérisé en ce que** la garniture de presse-étoupe (56) comprend une bague de pression sollicitée par ressort (57).

17. Robinet d'arrêt selon l'une quelconque des revendications 4 à 16, **caractérisé en ce que** le tube de pression (30) peut être raccordé à l'alimentation en fluide-barrière pour le rinçage du tube de pression (30), en particulier lorsque le clapet d'arrêt (2) se trouve dans la position de passage.

18. Robinet d'arrêt selon l'une quelconque des revendications 1 à 17, **caractérisé en ce que** la pression (Pi) détectée au moyen du dispositif de mesure de pression (25) dans l'espace annulaire (15) sert de grandeur de guidage d'un dispositif de régulation de l'alimentation en fluide-barrière, afin de maintenir la pression de fluide-barrière (Pi) régnant dans l'espace annulaire (15) au-dessus des pressions d'arrêt (P1 ; P2).

19. Procédé pour faire fonctionner un robinet d'arrêt selon l'une quelconque des revendications précédentes, **caractérisé en ce qu'**au moyen du dispositif de mesure de pression (25), la pression (Pi) du fluide-barrière dans l'espace annulaire (15) est mesurée et la pression mesurée (Pi) sert de paramètre pour une commande de fonctionnement.

20. Procédé selon la revendication 19, **caractérisé en ce que** la pression mesurée (Pi) dans l'espace annulaire (15) est utilisée en tant que grandeur de guidage ou grandeur de régulation d'un circuit de régulation de l'alimentation en fluide-barrière, afin de maintenir la pression (Pi) du fluide-barrière dans l'espace annulaire (15) supérieure à la pression (P1) avant le clapet d'arrêt (2) et/ou à la pression (P2) derrière le clapet d'arrêt (2).

21. Procédé selon la revendication 19 ou 20, **caractérisé en ce que** pour le contrôle de l'étanchéité du robinet d'arrêt, le clapet d'arrêt (2) est fermé, l'espace annulaire (15) entre les éléments d'étanchéité (10a ; 10b) est séparé de l'alimentation en fluide-barrière et est ensuite désaéré, et ensuite, au moyen du dispositif de mesure de pression (25), la pression (Pi) dans l'espace annulaire (15) est mesurée, et dans le cas d'une pression s'écartant de la pression de désaérage, un défaut d'étanchéité des éléments d'étanchéité (10a ; 10b) étant déterminé.
